## Europäisches Patentamt

## European Patent Office

## Office européen des brevets

(19)

(11) Veröffentlichungsnummer: **0 096 790**
**B1**

(12) **EUROPÄISCHE PATENTSCHRIFT**

(45) Veröffentlichungstag der Patentschrift:
16.12.87

(21) Anmeldenummer: 83105322.8

(22) Anmeldetag: 30.05.83

(51) Int. Cl.⁴: **C 08 J 3/12,** B 29 B 9/02,
B 01 J 2/30

(54) **Verfahren zur Herstellung klebfreier oder klebarmer Partikel von Hydrogelpolymerisaten.**

(30) Priorität: 11.06.82 DE 3221947

(43) Veröffentlichungstag der Anmeldung:
28.12.83 Patentblatt 83/52

(45) Bekanntmachung des Hinweises auf die Patenterteilung:
16.12.87 Patentblatt 87/51

(84) Benannte Vertragsstaaten:
BE CH DE FR GB IT LI NL

(56) Entgegenhaltungen:
DE-A-2 443 964
DE-A-2 747 168
DE-A-3 045 019
US-A-3 905 122

O. A. NEUMÜLLER: Römpps Chemie-Lexikon, 7.
Auflage, Band 6, 1977, FANCKH'SCHE
VERLAGSHANDLUNG, Stuttgart, Seiten 3654, 3655

(73) Patentinhaber: **CASSELLA Aktiengesellschaft,
Hanauer Landstrasse 526, D-6000 Frankfurt am
Main 61 (DE)**

(72) Erfinder: **Ghislanzoni, Salvatore, Wächtersbacher
Strasse 14 a, D-6000 Frankfurt/Main (DE)**
Erfinder: **Schmitz, Hermann, Dr., Marbachweg 313,
D-6000 Frankfurt/Main 1 (DE)**
Erfinder: **Croon, Helmut, Nordring 97, D-6000
Frankfurt/Main 60 (DE)**

(74) Vertreter: **Urbach, Hans- Georg, Dr., Hanauer
Landstrasse 526, D-6000 Frankfurt am Main 61 (DE)**

EP 0 096 790 B1

## Beschreibung

Die vorliegende Erfindung betrifft ein Verfahren zur Herstellung klebfreier oder klebarmer Partikel von Hydrogelpolymerisaten, die als solche transportfähig sind oder durch Wärmezufuhr getrocknet oder angetrocknet werden können, ohne miteinander zu verkleben.

Hydrogelpolymerisate sind formstabile, gallertartige, wäßrige Lösungen wasserlöslicher Homo- oder Copolymerisate, die in der Technik vielfältige Anwendung finden. Produkte dieser Art werden verwendet zur Papierveredlung und zur Papierherstellung, als Verdickungsmittel, z,B. in kosmetischen Zubereitungen oder Farbstoffdispersionen, die im Textil- oder Buchdruck eingesetzt werden, als Färbehilfsmittel, z. B. beim Klotzen von Textilmaterialien mit Farbstoff-Flotten, als Dispersionsstabilisierungsmittel in Bohrspülungen, bei der Tertiär-Förderung von Erdöl und als Flockungshilfsmittel bei der Aufbereitung von industriellem und kommunalem Abwasser.

Auch vernetzte, wasserquellbare polymerisate bzw. Copolymerisate wie sie z. B. auf dem Hygienesektor als Absorbentien für wäßrige Flüssigkeiten Verwendung finden, können in Form von Hydrogelen erhalten werden. Den sehr unterschiedlichen Einsatzgebieten werden diese Hydrogelpolymerisate durch die Wahl der Monomeren bzw. Comonomeren angepaßt. Gemeinsam ist den Gelpolymerisaten vor allen Dingen ihr besonders hohes Molekulargewicht und, sofern gewünscht, die gute Linearität der Polymerkette,

Ein weiteres Merkmal, das allen diesen bekannten Hydrogelpolymerisate gemeinsam ist, ist die Art ihrer Herstellung. Sie werden erhalten durch die sogenannte Gelpolymerisation in wäßrigem Medium, bei der die in der Regel wasserlöslichen Monomeren bzw. Comonomeren in der gewünschten Zusammensetzung in Wasser gelöst werden und die Polymerisation in dieser Lösung abläuft, wobei in der Regel nur schwach oder gar nicht gerührt wird, um durch den sogenannten Trommsdorff-Norrish-Effekt eine möglichst günstige Molgewichtsverteilung der Polymeren zu erhalten. Wie bereits ausgeführt, fallen die Polymerisate bei dieser Herstellung in Form gallertartiger, nicht mehr fließfähiger, d. h. formstabiler wäßriger Lösungen mit einem Polymerengehalt von bis zu ca. 50 %, vorzugsweise 20 bis 35 %, an. (Literatur: "Ullmanns Encyclopädie der technischen Chemie", 3. Aufl, (1963) Bd, 14, Seiten 274, 275, 286, 290 bis 293; "Houben-Weyl", Bd. 14, Teil 1(1961) Seiten 257, 258, 1026, 1030, 1041; "Kirk-Othmer" 2. Auflage (1963) Seite 274; DE-OS 2 143 549).

Den ausgezeichneten anwendungstechnischen Wirkungen der Hydrogelpolymerisate auf ihren verschiedenen Einsatzgebieten stehen die Schwierigkeiten gegenüber, Hydrogelpolymerisate in eine anwendungsbereite Form zu überführen und sie über größere Entfernungen zu transportieren. So ist beispielsweise recht schwierig aus einem Hydrogelpolymerisatblock eine so verdünnte wäßrige Lösung des Polymeren herzustellen, daß damit z. B. eine Abwasserklärung durchgeführt werden kann. Aus kinetischen Gründen findet nämlich die Auflösung größerer Polymerisatblöcke in Wasser nur sehr langsam statt. Das Transportproblem hat seine Ursache in dem hohen Wassergehalt der Hydrogelpolymerisate (80 bis 65 % $H_2O$), der, bezogen auf wirksames Polymerisat, zu sehr hohen Wasser-Transportkosten führt. Eine wichtige technische Aufgabe, die dringend einer Lösung bedarf, besteht somit darin, eine geeignete Methode zu finden, Hydrogelpolymerisatblöcke soweit zu zerkleinern und in der zerkleinerten Form zu stabilisieren, daß die Produkte gut handhabbar sind und 2. eine Möglichkeit zu finden, Hydrogelpolymerisaten einen großen Teil ihres Wassergehaltes zu entziehen. Die technischen Schwierigkeiten, die sich hierbei ergeben, beruhen vor allen Dingen darauf, daß die Hydrogele eine extreme Klebrigkeit aufweisen; sie haften hartnäckig an Apparatenteilen und neigen auch dazu, in kürzester Zeit untereinander zu verkleben. Mit anderen Worten, sie weisen sehr hohe Adhäsions- und Kohäsionsneigung auf.

Aus der US-A-3 905 122 ist ein Verfahren bekannt zum Trocknen von Hydrogelen wasserlöslicher Polymerisate und Copolymerisate bei dem das Gel mittels eines Extruders durch eine Lochplatte gepreßt wird und durch ein unmittelbar vor oder hinter der Lochplatte rotierendes Messer Teilchen geformt werden. Beim Austreiben dieser Teilchen aus dem Extruder haften diese dann durch die Klebrigkeit der Masse an den Berührungsstellen wieder zusammen, so daß zunächst ein Produkt erhalten wird, das die Form von "Perlschnüren" aufweist. Nach der Lehre der genannten US-Patentschrift werden diese Perlschnüre anschließend unter dem Einfluß von Scherkräften mit heißer Luft angetrocknet oder getrocknet, wobei ein großer Teil der Perlschnüre in einzelne Perlen zerfällt. Ein anderer Teil der Perlschnüre verklebt jedoch miteinander und muß am Schluß des Trockenvorgangs abgetrennt werden. Die Deutschen DE-A-2 143 549 und 23 43 179 betreffen ebenfalls die Herstellung von Hydrogelpartikeln. Nach der Lehre dieser Druckschriften werden die in einem geeigneten Zerkleinerungsaggregat, beispielsweise einem Fleischwolf, hergestellten Gelpartikel dadurch am Verkleben gehindert, daß sie unmittelbar nach ihrer Herstellung in einem Mischaggregat mit einem festen Trennmittel überpudert werden, wobei als Trennmittel solche Substanzen eingesetzt werden, die im Wasser unlöslich aber quellbar sind. Anschließend an das Überpudern kann sich ein Trocknungs- oder Antrocknungsvorgang anschließen. Ein ähnlicher Vorschlag ist der DE-A-2 747 168 zu entnehmen, bei dem ein Zusatz von Stearinsäure zu dem Polymerisatgel die Herstellung kleiner Gelpartikel ermöglichen und deren Wiederverkleben verhindern soll. Dieser Druckschrift ist auch zu entnehmen, daß eine Herabsetzung von Adhäsions- und Kohäsionsneigung von Hydrogelen dadurch erzielt werden kann, daß bereits den Polymerisationsansätzen Alkancarbonsäuren, insbesondere Stearinsäure, bis zur Sättigung des wäßrigen Mediums an diesen Säuren zugesetzt wird. Nach den Angaben dieser Druckschrift kann auch ein Überschuß der genannten Carbonsäuren verwendet werden, der dann auf der Oberfläche der Polymerisatansätze schwimmt und weiter nicht stört. Nach der Lehre dieser Druckschrift ist davon auszugehen, daß der in dem wäßrigen Medium gelöste Anteil der Carbonsäuren den Effekt auf Adhäsions- und Kohäsionsneigung der Polymerisatgele auf bisher unbekannte Weise beeinflußt.

Diese bisher bekannten Verfahren zur Herstellung von Hydrogelpartikeln sind jedoch noch nicht voll befriedigend. Bei der nachträglichen Bepuderung von Hydrogelpartikel zur Verhinderung des gegenseitigen Verklebens ist ein dem Zerkleinerungsvorgang nach-geschalteter Bepuderungsschritt erforderlich. Die Kosten des Verfahrens steigen und das Bepuderungsmittel kann zu Störungen bei der Verwendung der Gelpolymerisate führen. Auch ist die Wirksamkeit der Bepuderungsmittel nicht in allen Fällen voll befriedigend, insbesondere dann, wenn eine längere Lagerung der bepuderten Partikel erforderlich ist. Auch die aus der DE-A-2 747 168 bekannten Vorschläge zur Herabsetzung des Adhäsions- und Kohäsionsbestrebens von Polymerisathydrogelen führen nicht in allen Fällen zu voll befriedigenden Ergebnissen, insbesondere wenn die Konzentration der Polymersubstanz in dem Gel nicht die dort als bevorzugt angegebene Höhe von etwa 20 bis 25 Gew.% erreicht.

Ein etwas abseitsliegender Vorschlag, der ebenfalls auf eine Erleichterung der Weiterverarbeitung von Hydrogelen zielt, ist der DE-A-3 045 019 zu entnehmen. Diese Druckschrift betrifft ein Verfahren zur Partialhydrolyse von Polymerisaten und Copolymerisaten des Acrylamids, wobei eine Verbesserung der Gleichmäßigkeit der Hydrolyse dadurch erzielt wird, daß die Hydrolyse-Apparatur innenverchromt wird und man den Ansätzen zumindest teilweise wasserlösliche Polyether zusetzt, Dieses Verfahren zielt jedoch nicht auf die Herstellung lagerfähiger oder trockenbarer Ölpartikel ab, sondern dient lediglich der Verhinderung des Verklebens bei der Hydrolysereaktion.

Es wurde nun gefunden, daß man einen erheblichen Fortschritt bei der Herstellung klebfreier oder klebarmer Partikel von Hydrogelpolymerisaten erzielen kann, wenn man bei der Extrusion des Polymerisatgels durch Lochscheiben und Schneiden der Gelstränge dem Extruder gemeinsam mit dem Polymerisatgel eine organische Verbindung mit einem langkettigen Alkyl- oder Alkenylrest oder ein OOrganopolysiloxan als Trennmittel zuführt.

Das Trennmittel wird dem Extruder in einer Menge von 0,05 bis 2 Gew.%, vorzugsweise 0,1 bis 0,8 Gew.%, bezogen auf das Gewicht des Hydrogels zugeführt.

Als Trennmittel für das erfindungsgemäße Verfahren kommen organische Verbindungen, die mindestens einen langkettigen Alkyl-oder Alkenylrest enthalten, oder Organopolysiloxane, insbesondere linearpolymere Dimethylsiloxane, in Betracht. Geeignete Substanzen sind insbesondere langkettige aliphatische Kohlenwasserstoffe, wie z. B. Erdölfraktionen mit einem Siedebereich von 200 bis 400°C, Glyceride höherer Fettsäuren, wie Stearinsäure, Palmitinsäure, Ölsäure, Ricinolsäure, Laurinsäure und deren Gemische sowie Methylsiliconöl mit einer Viscosität von 10 bis 5000 ($10^{-5}$ bis $5.10^{-3}$), vorzugsweise 20 bis 1000 cSt ($2.10^{-5}$ bis $10^{-3}$ $m^2/s$).

Besonders bevorzugt als Trennmittel bei dem erfindungsgemäßen Verfahren ist der Einsatz von Paraffinöl Die Trennmittel können sowohl bei Normaltemperatur flüssig als auch bei Normaltemperatur fest oder halbfest sein. Sie werden dem Extruder entweder ohne weitere Zusätze in geschmolzenem Zustand oder in Form von bei der Arbeitstemperatur flüssigen wäßrigen Zubereitungen in dispergiertem bzw. emulgiertem Zustand zugeführt. Unter der Zufuhr von Trennmitteln in geschmolzenem Zustand ist auch beispielsweise die Zufuhr von Trennmitteln zu verstehen, die bei Zimmertemperatur im flüssigen Zustand vorliegen.

Bei der Zufuhr von emulgierten bzw. dispergierten Trennmitteln werden wäßrige Emulsionen bzw. Dispersionen eingesetzt mit einem Gehalt von bis zu 50 Gew.%, vorzugsweise bis 20 Gew.% des Trennmittels und 2 bis 20 Gew.%, vorzugsweise 5 bis 15 Gew.%, bezogen auf das Gewicht des Trennmittels, eines Emulgier- oder Dispergiermittels.

Als besonders vorteilhaft hat es sich erwiesen, wasserfreie flüssige Trennmittel ohne weitere Zusätze oder flüssige Zubereitungen bestehend aus Trennmitteln und Emulgatoren bzw. Dispergiermitteln zuzuführen.

Hierbei wird dem Extruder anstelle einer wäßrigen Emulsion oder Dispersion eine Kombination des Trennmittels mit 2 bis 20 Gew.%, vorzugsweise 5 bis 15 Gew.%, bezogen auf das Trennmittel, eines Emulgier- oder Dispergiermittels zugeführt. Gegenüber der Zufuhr einer Emulsion oder Dispersion hat diese bevorzugte Ausführungsform den Vorteil, daß kein zusätzliches Wasser mehr zubeführt wird und somit keine weitere Verdünnung des Hydrogels erfolgt und bei der Trocknung kein zusätzliches Wasser verdampft werden muß. Das Trennmittel kann dem Extruder entweder gemeinsam mit dem Polymerisatgel durch die Einfüllöffnung zugeführt werden, oder es kann mittels einer Pumpe in den Arbeitsbereich (1) der Extruderschnecke eingeführt werden. Unter Arbeitsbereich der Schnecke ist hierbei der Bereich zu verstehen, in dem die Extruderschnecke den Innendruck aufbaut und nennenswerte Energie auf das Füllgut überträgt. Bei der Zufuhr durch den Einfüllschacht des Extruders kann es zu einer Störung dadurch kommen, daß der Extruder das durch den Einfüllschacht eingeführte Polymerisatgel nicht mehr aktiv einzieht. Die Störung kann leicht dadurch behoben werden, daß das Gel dem Extruder unter leichtem Druck zugeführt wird.

Die beschriebene Störung kann ganz und gar dann vermieden werden, wenn man das Trennmittel dem Extruder im Arbeitsbereich (1.) der Extruderschnecke zuführt an einer Stelle, wo sich der Innendruck des Extruders bereits so weit aufgebaut hat, daß ein sicherer Weitertransport des Polymerisats durch die Schnecke erfolgt. Besonders bevorzugt ist die Zufuhr des Trennmittels in der vorderen Hälfte des Arbeitsbereichs der Schnecke, d.h. der der Ausstoßöffnung mit der Lochplatte zugewandten Hälfte des Arbeitsbereichs. Die Zufuhr des Trennmittels kann technisch in beliebiger Weise geregelt werden. So ist es möglich, das Trennmittel durch eine oder mehrere über den Umfang des Extrudergehäuses verteilte Zuführungsöffnungen vorzunehmen, oder das Mittel kann durch eine Bohrung in der Welle der Extruderschnecke in den Arbeitsbereich der Schnecke eingepreßt werden.

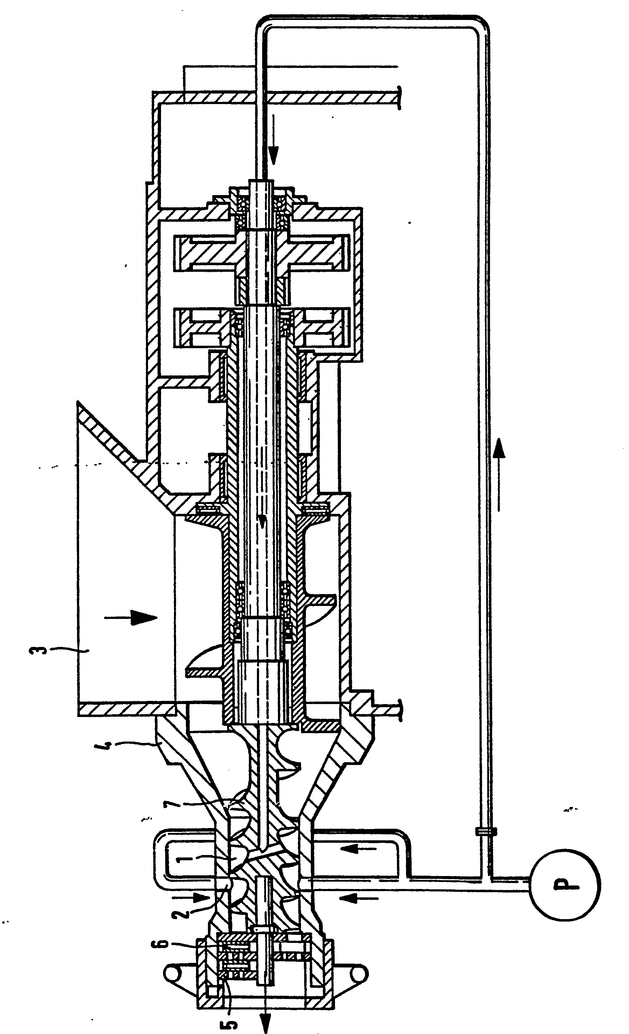

Die Zeichnung zeigt die schematische Darstellung einer technischen Ausgestaltung eines für die Durchführung des erfindungsgemäßen Verfahrens geeigneten Extruders. In der Zeichnung bedeutet (3) den Einfüllschacht eines Extruders, (4) das Extrudergehäuse und (7) die Extruderschnecke; (6) ist das mit der Extruderschnecke umlaufende Messer und (5) sind Lochplatten, durch die das vom Messer (6) geschnittene Polymerisatgel ausgepreßt wird. (2) sind Öffnungen im Extrudergehäuse (4), durch die mittels der Dosierpumpe P das Trennmittel bzw. die Trennmittelzubereitung in den Arbeitsbereich der Schnecke eingepreßt werden kann.

Alternativ zu der Zuführung des Trennmittels durch die Gehäusebohrungen (2) kann, wie bereits oben ausgeführt, die Zufuhr auch durch die Extruderschnecke erfolgen. Die Zeichnung zeigt beide Möglichkeiten. Bei der alternativen Arbeitsweise wird das Trennmittel mittels der Dosierpumpe durch die axiale Zentralbohrung und die Öffnungen bei (1) in der Schneckenwelle des Extruders in den Arbeitsbereich der Schnecke eingepreßt.

Als Emulgatoren bzw. Dispergiermittel kommen im Prinzip alle bekannten Typen in Betracht, insbesondere nichtionogene Verbindungen. Derartige Emulgier- oder Dispergiermittel sind in großer Zahl bekannt und der Literatur, z. B. Ullmanns Encyclopädie der technischen Chemie, 4. Aufl. (1975), Bd,10, Seite 455 ff. zu entnehmen.

Gut geeignete Emulgier- bzw. Dispergiermittel sind demnach Festsäureester mehrwertiger Alkanole, Fettamine und Fettsäureamide, Alkoxylierungsprodukte (Umsetzungsprodukte von Alkylenoxiden) mit OH-Gruppen enthaltenden organischen Verbindungen, hochmolekulare natürliche und synthetische organische Verbindungen wie Eiweißstoffe, Polysaccharide, Gummiarten, Schleime oder Polymerisate und Polykondensate.

Besonders günstige Emulgatoren und Dispersiermittel für den erfindungsgemäßen Einsatz sind Umsetzungsprodukte von Alkylenoxiden, insbesondere Ethylenoxid und Propylenoxid mit Phenolen, Alkylphenolen, Alkoholen, aliphatischen gesättigten oder ungesättigten Carbonsäuren, Fettaminen, Hydroxylgruppen aufweisenden Estern von gesättigten oder ungesättigten Carbonsäuren oder deren Gemische.

Nach dem erfindungsgemäßen Verfahren können Polymerisat-Hydrogele, die ohne Trennmittelzusatz nur in Form von "Perlschnüren" extrudiert werden, in Perlform erhalten werden, dessen perlförmige Partikel keine oder nur eine geringe Neigung zeigen, miteinander oder mit Arbeitsgeräten zu verkleben. Die so erhaltenen Partikel lassen sich ohne Schwierigkeiten im Heißluftstrom trocknen und neigen auch bei dieser Operation nicht zu einer Aggregation. Man kann somit trockene Granulate erhalten, die in üblichen Aggregaten zu Pulver vermahlen werden können.

Bei Einsatz der obengenannten, langkettige aliphatische Reste enthaltenden Verbindungen als Trennmittel (z. B. Erdölfraktionen, Glyceride) wird auch dieses im Verlauf der Trocknung aus dem Polymerisat ausgetrieben, so daß dann trennmittelfreie Polymergranulate erhalten werden.

Ein weiterer nicht zu unterschätzender Vorteil des erfindungsgemäßen Verfahrens besteht darin, daß der Durchsatz an Polymer-Hydrogel durch den Extruder ganz erheblich ansteigt bei gleichem oder sogar verringertem Energieaufwand. Der Anfall nicht verklebender perlförmiger Gelgranulate und der hohe Durchsatz durch den Extruder ermöglichen eine kontinuierliche Arbeitsweise von der Zerkleinerung der Gelblöcke bis zur Abfüllung der Granulate oder Pulver in versandfertige Gebinde.

Die Herabsetzung des Energiebedarfs für die Extrusion bringt insbesondere bei extrem hochmolekularen Copolymerisaten den zusätzlichen Vorteil mit sich, daß der Abbau des mittleren Molekülargewichts, der häufig an solchen Produkten im Verlaufe eines Extrusionsvorgangs zu beobachten ist, erheblich reduziert wird. Dies ist von besonderer Bedeutung, weil in der Regel die anwendungstechnischen Eigenschaften von Hydrogelpolymerisaten wesentlich mitbestimmt sind durch die Höhe des Molekulargewichts und oft die Wirksamkeit der Produkte umso besser ist je höher das mittlere Molekulargewicht der Copolymerisate ist. Insofern können nach dem erfindungsgemäßen Verfahren Polymergranulate oder -pulver erhalten werden, die den nach bekannten Verfahren extrudierten und getrockneten Produkten in Bezug auf ihre anwendungstechnischen Eigenschaften deutlich überlegen sind.

Die folgenden Ausführungsbeispiele veranschaulichen die Durchführung des erfindungsgemäßen Verfahrens und seine Vorteile gegenüber dem nächstvergleichbaren bekannten Verfahren, bei dem ein Trennmittel erst nach der Extrusion zur Anwendung gebracht wird.

**Beispiel 1**

80 kg eines Acrylamidcopolymeren aus 50 Gew.% Acrylamid und 50 Gew.% Acrylamido-methylpropansulfonsäure in Form eines Hydrogels mit einem Feststoffgehalt von 33 Gew.% werden in Portionen von ca. 20 kg über den Einfüllschacht (E) in den laufenden Extruder gegeben. Durch kontinuierliches Einpressen einer Mischung von 400 g Paraffinöl und 56 g Oleylalkoholpolyglycoläther als Emulgator in den Arbeitsbereich (1) der Schnecke (7) erhält man in einer Zeit von ca. 6 Minuten ein perlförmiges Gelgranulat, dessen Einzelperlen nicht miteinander verkleben und das im Heißluftstrom in 60 Minuten bis auf einen Restfeuchtegehalt von 20 % zu einem praktisch paraffinölfreien Trockengranulat entwässert und durch anschließendes Mahlen in ein Pulver überführt werden kann.

4

**Vergleichsbeispiel 1**

80 kg des gleichen Produktes werden ebenfalls in Portionen von ca. 20 kg in den gleichen Extruder gegeben. Ohne Zudosierung von Paraffinöl und Emulgator werden zum Zerkleineren des Gels ca. 15 Minuten benötigt. Das Produkt tritt aus der Lochscheibe des Extruders als "Perlschnüre" aus, die beim Kontakt miteinander sofort verkleben. Die zusammenklebenden Perlschnüre gelangen in einen Mischbehälter, wo sie mit einer Emulsion aus ca. 8000 g Wasser, 800 g Paraffinöl und 72 g Emulgator versetzt werden. Durch 15 - 20 minutiges Vermischen ist der größte Teil in nicht mehr miteinander verklebende Einzelperlen zerfallen. Ca. 18 % des Produktes liegen jedoch in Form von Perlaggregaten vor und müssen daher vor der Trocknung abgetrennt werden. Für die anschließende Trocknung des Produktes im Heißluftstrom werden unter gleichen Bedingungen zur Erzielung eines Restfeuchtegehaltes von 20 % 80 Minuten benötigt. Auch hier wird ein praktisch paraffinölfreies Granulat erhalten, das durch Mahlen in ein Pulver überführt werden kann.

**Beispiele 2-7 und Vergleichsbeispiele 2-7**

Die in der folgenden Tabelle verwendeten Abkürzungen haben folgende Bedeutungen:
AM: Acrylamid
AS-K: Acrylsäure-Kaliumsalz
AIBS: Acrylamido-methylpropansulfonsäure
VIMA: N-Vinyl-N-methylacetamid
VIPS: Vinylphosphonsäure
VIPY: Vinylpyrrolidon
VSS-Na: Vinylsulfonsäure-Natriumsalz
WS: Wirkstoffkonzentration

| Beispiel-Nr | Gelpolymerisat (%WS) | Trennmittel (% bez. auf Gel) | Emulgator (% bez. auf Trennmittel) | Klumpenbildung in Gew. % vom Ausgangsel | Durchsatz kg/h |
|---|---|---|---|---|---|
| 2 | 70% AM/30%AS-K (25) | Paraffinöl 0,2 | Oleylalkohol 15 Polyglykoläther | 0 | 1000 |
| Vergleichsbeispiel 2 | " | - | - | 10 | 500 |
| 3 | 90% AM/10%AS-K (27) | n-Hexadecan 0,8 | Rizinusöl- 12 EO-Addukt | 0 | 800 |
| Vergleichsbeispiel 3 | " | - | / | 15 | 500 |
| 4 | 60% AM/35%AIBS/(30) 5% ViMA | Petroleum 1,5 | Alkansulfonat 5 -Na | 0 | 800 |
| Vergleichsbeispiel 4 | " | - | - | 12 | 400 |
| 5 | 80% AM/15%VSS-Na/ 5% Vipy (28) | n-Nonan 2,0 | - | 1 | 700 |
| Vergleichsbeispiel 5 | " | - | - | 17 | 390 |
| 6 | 40% AM/50% AIBS 10% VIPS (35) | Rizinusöl 0,5 | - | 2 | 800 |
| Vergleichsbeispiel 6 | " | - | - | 16 | 420 |
| 7 | 70% AM/30% AS-K (25) | Siliconöl 0,2 | p-Nonylphenol-10 polyglycoläther | 0 | 950 |
| Vergleichsbeispiel 7 | " | - | - | 10 | 600 |

**Patentansprüche**

1. Verfahren zur Herstellung klebfreier oder klebarmer Partikel von Hydrogelpolymerisaten durch Extrusion des Polymerisatgels durch Lochscheiben und Schneiden der Gelstränge, dadurch gekennzeichnet, daß dem Extruder gemeinsam mit dem Polymerisatgel eine organische Verbindung mit einem langkettigen Alkyl- oder Alkenylrest oder ein Organopolysiloxan als Trennmittel zugeführt wird.

2. Verfahren nach Anspruch 1, dadurch gekennzeichnet, daß als Trennmittel eine Erdölfraktion mit einem Siedebereich von 200 bis 400°C, ein Glycerid höherer Fettsäuren oder ein Methylsiliconöl mit einer Viskosität von 10 bis 5000 cSt/ ($10^{-5}$ bis 5, $10^{-3}$ m²/s) zugeführt wird.

3. Verfahren nach den Ansprüchen 1 bis 2, dadurch gekennzeichnet, daß als Trennmittel Paraffinöl zugeführt wird.

4. Verfahren nach den Ansprüchen 1 bis 3, dadurch gekennzeichnet, daß das Trennmittel in einer Menge von 0,05 bis 2 Gew.%, bezogen auf das Gewicht des in dem Polymerisatgel enthaltenen Polymerisats, zugeführt wird.

5. Verfahren nach den Ansprüchen 1 bis 4, dadurch gekennzeichnet, daß das Trennmittel in einer Menge von 0,1 bis 0,8 Gew.%, bezogen auf das Gewicht des in dem Polymerisatgel enthaltenen Polymerisats, zugeführt wird.

6. Verfahren nach den Ansprüchen 1 bis 5, dadurch gekennzeichnet, daß das Trennmittel in geschmolzenem Zustand oder in Form einer flüssigen Zubereitung zugeführt wird.

7. Verfahren nach den Ansprüchen 1 bis 6, dadurch gekennzeichnet, daß das Trennmittel in Form einer flüssigen wäßrigen Zubereitung zugeführt wird.

8. Verfahren nach den Ansprüchen 1 bis 7, dadurch gekennzeichnet, daß eine Kombination des Trennmittels mit einem Dispergier- bzw. Emulgiermittel eingesetzt wird.

9. Verfahren nach Anspruch 8, dadurch gekennzeichnet, daß die eingesetzte Kombination 2 bis 20 Gew.% Dispergier- bzw. Emulgiermittel, bezogen auf das Gewicht des Trennmittels, enthält.

10. Verfahren nach den Ansprüchen 1 bis 9, dadurch gekennzeichnet, daß das Trennmittel in den Arbeitsbereich der Extruderschnecke eingeführt wird.


## Claims

1. Process for preparing tack-free or low-tack hydrogel polymer particles by extruding the polymer gel through perforated discs and chopping the gel extrudates in a known manner, characterised in that the extruder is fed, together with the polymer gel, with a long-chain alkyl or alkenyl radical or a organopolysiloxane as an anti-tack agent.

2. Process according to Claim 1, characterised in that the anti-tack agent used is a petroleum fraction having a boiling range from 200 to 400°C, a glyceride of higher fatty acids or a methylsilicone oil having a viscosity of 10 to 5000 cSt ($10^{-5}$ to 5 x $10^{-3}$ m² /s).

3. Process according to Claims 1 to 2, characterised in that paraffin oil is used as the anti-tack agent.

4. Process according to Claims 1 to 3, characterised in that the anti-tack agent is supplied in an amount of 0.5 to 2 % by weight, relative to the weight of polymer contained in the polymer gel.

5. Process according to Claims 1 to 4, characterised in that the anti-tack agent is supplied in an amount of 0.1 to 0,8 % by weight, relative to the weight of polymer contained in the polymer gel.

6. Process according to Claims 1 to 5, characterised in that the anti-tack agent is supplied in the form of a melt or in the form of a liquid formulation.

7. Process according to Claims 1 to 6, characterised in that a combination of the anti-tack agent is supplied in the form of a liquid aqueous formulation.

8. Process according to Claims 1 to 7, characterised in that a combination of the anti-tack agent with a dispersant or emulsifier is used.

9. Process according to claim 8, characterised in that the combination used contains 2 to 20 % by weight of dispersant or emulsifier, relative to the weight of the anti-tack agent.

10. Process according to Claims 1 to 9, characterised in that the anti-tack agent is fed into the working zone of the extruder screw.


## Revendications

1. Procédé pour la préparation de particules noncollantes ou peu collantes de polymères sous forme d'hydrogels, par extrusion du gel polymère à travers des plaques perforées et découpage des cordons de gel, caractérisé en ce que l'on introduit dans l'extrudeuse, en même temps que le gel polymère, en tant qu'agent de séparation, un composé organique comportant un radical alkyle ou alcényle à longue chaîne ou un polyorganosiloxane.

2. Procédé selon la revendication 1, caractérisé en ce qu'on introduit comme agent de séparation une fraction pétrolière présentant un intervalle d'ébullition de 200-400°C, un glycéride d'acides gras supérieurs ou une huile de méthylsilicone ayant une viscosité de 10 à 5000 cSt ($10^{-5}$ à $5.10^{-3}$ m²/s).

3. Procédé selon les revendications 1 et 2, caractérisé en ce qu'on introduit comme agent de séparation de l'huile de paraffine.

4. Procédé selon les revendications 1 à 3, caractérisé en ce que l'agent de séparation est introduit en une quantité de 0,05 à 2 % en poids par rapport au poids du polymère contenu dans le gel polymère.

5. Procédé selon les revendications 1 à 4, caractérisé en ce que l'agent de séparation est introduit en une quantité de 0,1 à 0,8 % en poids par rapport au poids du polymère contenu dans le gel polymère.

6. Procédé selon les revendications 1 à 5, caractérisé en ce que l'agent de séparation est introduit à l'état fondu ou sous la forme d'une préparation liquide.

7. Procédé selon les revendications 1 à 6, caractérisée en ce que l'agent de séparation est introduit sous la forme d'une préparation aqueuse liquide.

8. Procédé selon les revendications 1 à 7, caractérisé en ce qu'on utilise une combinaison de l'agent de séparation et d'un dispersant ou d'un émulsionnant.

9. Procédé selon la revendication 8, caractérisé en ce que la combinaison utilisée contient de 2 à 20 % en poids d'un dispersant ou d'un émulsionnant, par rapport au poids de l'agent de séparation.

10. Procédé selon les revendications 1 à 9, caractérisé en ce que l'agent de séparation est introduit dans la zone de travail de la vis de l'extrudeuse.